# EUROPEAN PATENT APPLICATION

(11) **EP 2 009 874 A1**
(43) Date of publication of application: **31.12.2008**
(21) Application number: 07290795.9
(22) Date of filing: 27.06.2007
(51) Int. Cl.: H04L 29/08

(54) **A system and according method for subscribing users to services**

(71) Applicant: Alcatel Lucent, 75008 Paris (FR)
(72) Inventor: Van Broeck, Sigurd, 2980 Zoersel (BE); Lou, Zhe, 9000 Gent (BE); Trappeniers, Lieven Leopold Albertine, 2200 Herentals (BE); Brackx, Michael Frederik François Albert, 9000 Gent (BE); Godon, Marc Bruno Frieda, 1840 Londerzeel (BE); Criel, Johan Georges Prosper, 9000 Gent (BE)
(74) Representative: Plas, Axel Ivo Michel

(57) **Abstract**

The present invention relates to a service subscription system comprising at least one subscription server (106; 107; 108; 204) having means for managing subscriptions to at least one service and a client terminal (101; 201) comprising means for communicating with the subscription server (106, 107, 108; 204). The client terminal (101; 201) comprises means for retrieving a service identification related to the service from a service advertisement (102, 103; 202) by touch (109, 112; 205) and means for initiating a subscription request (110, 113; 206) based on the service identification.

## Description

### Field of the Invention

The present invention generally relates to subscriptions for services and more in particular to subscriptions for real-time updated services.

### Background of the Invention

The Internet offers a wide variety of services to the general public. One particular type of service is the live update service. Live update services provide information to the general public of ongoing events in the broadest sense. Examples of such events are traffic, sports results, news, stock exchange, etc. A typical method of delivering such services is by sending emails to the subscribed users, providing them with frequently updated web pages, updating RSS feeds or ATOM feeds (as defined in RFC4287), and so on. Some live update services are even able to send Short Message Service (SMS) messages or Mukimedia Message Service (MMS) messages to mobile telephones of users. In addition to the services offered by the Internet, there are numerous services which are SMS or MMS based. Such services include a daily SMS with a joke or quote, an MMS with a new ring tones, new logo's or pictures, etc.

Both the Internet based services and the SMS/MMS based services require a registration by the user in order to participate in the service. The registration is typically based on a user request. Therefore, the user has to find out about the service, determine how he can subscribe and perform the according steps. For instance, an operator of SMS/MMS services may publish a page with various services in magazines. The page illustrates each service and an identification related thereto. A user then has to select a service and SMS or MMS the identification to a number specified on that page. Another example are RSS or ATOM feeds for websites with frequent updates such as blogs, websites with news headlines, websites with weather information or traffic information. Before a user can receive such updates, he has to install software which enables the receiving of RSS or ATOM feeds. RSS and ATOM feeds are based on a pull mechanism which means that the RSS/ATOM software frequently checks for updates to an RSS/ATOM feed. Thus, the user has to configure his RSS/ATOM software with information related to each RSSIATOM feed that the user wants to track. Yet another example are mailing lists related to particular topics such as vendor products, traffic information, news, weather, etc. Again, the user has to find the mailing list and enter information to subscribe to the mailing list.

All of the above illustrated examples share a common drawback. The registration step requires a user to enter information and submit that information to the system. His information can be limited to a telephone number or email address but may be extensive and further include name, address, preferences, etc. This may not be a major problem for a single service but due to the large number of services available, it becomes cumbersome to a user to repeat his details over and over. In addition, there is no uniform way of subscribing, which means that a user has to learn a new subscription method for each new service.

It is an object of the present invention to provide a uniform system for service subscriptions. It is another object of the present invention to provide a less cumbersome system for service subscriptions to service users.

### Summary of the Invention

The above mentioned drawbacks of the prior art service subscription techniques are resolved and the objectives of the present invention are realized by a service subscription system comprising at least one subscription server for managing subscriptions to at least one service and a client terminal able to communicate with the subscription server characterized in that the client terminal comprises means for retrieving a service identification related to a service from a service advertisement by touch and means for automatically initiating a subscription request towards said subscription server based on the service identification.

Indeed, through initiating a subscription request by touch, a user of a client terminal is able to subscribe to one or more services without a lot of effort. The motion of touch can be physically touching the service advertisement with the client terminal or being close to the service advertisement with the client terminal, for a minimum amount of time or in a particular pattern. For instance, a client terminal may need to be near the service advertisement for at least several seconds before the subscription request is initiated, the client terminal may need to touch the service advertisement twice for a second to initiate the subscription request, etc. A basic pattern such as a physical touch offers a quick subscription whereas more complex patterns such as touching multiple times, turning or rotating the client terminal similar to turning a key, enabling a subscription mode on the client terminal in advance provides a more secure subscription thus avoiding accidental subscriptions to services. In addition, a more complex pattern may include a user confirmation such as a key press before the actual subscription is requested. Either way, the subscription is at least based on a service identification. This identification is used by the client terminal to indicate which service it wants to subscribe to. The identification may either be sent to the subscription server which in turn determines the requested service or may be used by the client terminal to determine which subscription server should be contacted.

The client terminal is adapted to retrieve a service Identification from the service advertisements and may be a fixed terminal or a mobile terminal. The client terminal's role may be limited to requesting the subscription or may also involve using the service or taking part in the service delivery to the user. For instance, the client terminal may support applications which are used for service delivery or the client terminal may be able to download application for service delivery. An advantage of mobile terminals such as mobile telephone, Personal Digital Assistants (PDA), etc. is that a user can carry the mobile terminal on him and access service advertisements in public places, buildings, houses, stores, etc. fixed terminals require that a user is able to take the service advertisement to the terminal. This is possible with advertisements located in magazines, packaging or products from vendors. These client terminals are able to communicate with the subscription server, either directly or through intermediary nodes. Additionally, the client terminal may need to locate a subscription server before it can initiate a subscription request towards a subscription server. Therefore, the client terminal may contact an additional node to perform a lookup of a subscription server for a particular service identification. A direct communication facilitates the subscription of devices which can identify themselves. For instance, subscription to a service by sending an text message with a mobile telephone identifies the telephone by his telephone number and thus the subscription server knows who has requested the subscription because the telephone number is automatically included in the text message. Similarly, an email sent by a client terminal can be identified by the sender email address. Of course, the subscription method depends on the requested services. Services which provide frequent updates such as traffic notification, announcements of new products, etc. can be delivered to a wide range of client terminals in various forms such as text, audio or video and by email, website references, SMS or MMS.

The subscription server manages the subscription requests for one or more services. It at least keeps track of the users subscribed to a particular service. It may further also be aware of the service delivery method, other available services or user preferences. This way, the subscription server may be able to subscribe a user for a particular service with a particular service delivery method during particular hours of the day. This may even lead to a variation of any of these parameters. For instance, a user can be subscribed to a traffic information service and define the method of delivery as SMS or MMS in the morning and email in the afternoon. This way, the user does not need a computer to check the traffic situation before he leaves for work as he receives the information on his mobile telephone and the user has access to the traffic information in the office before leaving for home. Alternatively, the subscription server may be incorporated into the client terminal, e.g. for pull services such as RSS/ATOM feeds. In such case the client terminal may retrieve a valid RSS/ATOM feed identifier from the service advertisement by touch and initiate a subscription request to that particular RSS/ATOM feed towards a subscription server running on the client terminal. For instance, after touching a service advertisement, the client terminal may be able to alter the configuration of an RSS/ATOM application on the client terminal to include the RSS/ATOM feed which was identified from the service advertisement.

Optionally, the service subscription system according to the present invention may further comprise a Touch Signalling Service (TSS) server adapted to receive the subscription request from the client terminal and adapted to subscribe a user associated with the client terminal to the service at the subscription server.

The TSS is able to receive subscription requests, interpret the subscription request and perform a subscription of the user associated with the client terminal at a subscription server. The user associated with the client terminal may be the person who owns the client terminal or a person registered in the TSS for the client terminal. However, the user associated with the client terminal is not necessarily the person who is handling the client terminal at the moment of touch. This means that a subscription request of a user is not sent directly to the subscription server but passes through the TSS. The TSS may use the service identification to retrieve the appropriate subscription server and initiate a subscription at that subscription server. Thus, a public operator such as a mobile telephone network operator could add a TSS to his network and offer touch-based subscription services to all of his users who have a corresponding client terminal. The user can then send a subscription request to his operator who in turn can subscribe the user at a subscription server. Additionally, the TSS may also be connected to the Internet to receive subscription requests over the Internet.

Each user may go through a one-time extensive registration at a TSS. In such case, the user may enter personal information such as telephone numbers, email address, postal address and other preferences at the TSS. This way, the TSS can easily supply information related to a particular user to a subscription server. For instance, if a user initiates a request with a mobile telephone for an email based service, the TSS can supply the subscription server with the email address of the user. Alternatively, the registration at the TSS is limited in that it only stores one or more pieces of contact information for each user and no additional information or preferences.

In addition, the TSS may provide a lookup function to a client terminal. The lookup function can be used by the client terminal to retrieve information that is required to contact a subscription server. This information can then be used by a client terminal to send a subscription request towards the subscription server.

In case where the subscription server is part of the client terminal, the TSS may provide a lookup function to translate a service identifier into the required information to access the service. In the particular case of RSS or ATOM, the TSS may translate a service identifier In an RSS/ATOM feed entry which can be added to the list of RSS/ATOM feeds tracked by the RSS/ATOM software of the client terminal.

Optionally, the service subscription system according to the present invention may be characterized in that the service advertisement comprises at least one token for holding at least the service identification and that the client terminal comprises at least one token reader for retrieving at least the service identification from the token or vice versa.

Tokens are considered as information holding objects. These objects may be physical objects such as electronic tags of any kind, optical recognizable information holders such as a bar code, drawing, symbol or alphanumeric combination, semacode, etc. Generally, in the context of the current invention, the tokens are able to contain at least a unique identification which can be related to a particular service, either by the client terminal, the subscription server or an optional TSS. These tokens may be integrated in small objects used as service advertisements or even into pages of paper or rather large objects such as vehicles, large appliances, road-side billboards, etc. Of course, there also needs to be a way of retrieving the information stored in these tokens. This can be done by using a token reader corresponding to the type of token that is used, for instance a camera to read alphanumeric combinations, symbols or drawings, a barcode scanner or an electronic tag reader. These readers enable a client terminal to discover available services and to automatically initiate a request for a particular service. Alternatively, the client terminal may contain a token which can be read by a token reader incorporated in a service advertisement This may be used in a situation where the service advertisement is responsible for the service delivery. For instance, when a user buys a train ticket he touches a token reader with his client terminal. The token reader registers that client terminal linked to a particular train. The information of the train station can then send the user information related to his train such as the track number, departure time, delays, etc.

Optionally, in the service subscription system according to the present invention, the at least one token and the at least one token reader are based on one or more of the following:
- Radio Frequency Identification technology (RFID);
- Near Field Communication technology (NFC);
- Optical recognition technology;
- Bluetooth technology; and
- Infrared communication technology.

Each of these technologies enable the storage of information and the retrieval thereof. Technologies such as RFID or NFC are based on proximity and enable the retrieval of information from within a particular range around a service advertisement. Optical recognition and infrared communication provide similar functionality in that their range is limited around the service advertisement. However, Infrared technology and optical recognition such as bar codes require a line of sight in order to function properly. Technologies such as Bluetooth can typically be used at a larger range than RFID, NFC or optical systems. Any of these technologies can be used to deliver the service related information from a service advertisement to a client terminal. However, because RFID or NFC tags can be reduced to a small size and low cost, they may be preferred for use in small objects or magazines advertising services.

Optionally, the service subscription system according to the present invention may be characterized In that the client terminal is a mobile communication device.

Mobile communication devices can be used everywhere, which means that a user may be able to subscribe to services through touch at any location where a service is advertised. A mobile communication device enables a user to retrieve information from a service advertisement at a variety of locations, either indoor or outdoor. Mobile communication devices inherently are able to communicate and are thus able to send subscription requests with only minor modifications such as a reader for the service specific information and software to initiate the requests based on the information retrieved from the service advertisement.

The present invention further relates to a corresponding client terminal and a corresponding subscription server for use in the service subscription system according to the present invention.

The drawbacks of the prior art are also overcome and the objectives of the present invention are also realized by a method for use in a service subscription system comprising at least one subscription server and a client terminal, the service subscription method comprises the step of managing subscriptions to at least one service at the subscription server the step of retrieving a service identification related to a service by the client terminal from a service advertisement by touch and the step of automatically initiating a subscription request from the client terminal towards the subscription server based on the service identification.

### Brief Description of the Drawings

Fig. 1 a and 1b illustrate a first embodiment of the service subscription system and method according to the present invention; and
Fig. 2 illustrates an alternative embodiment of the service subscription system and method according to the present invention.

### Detailed Description of Embodiment(s)

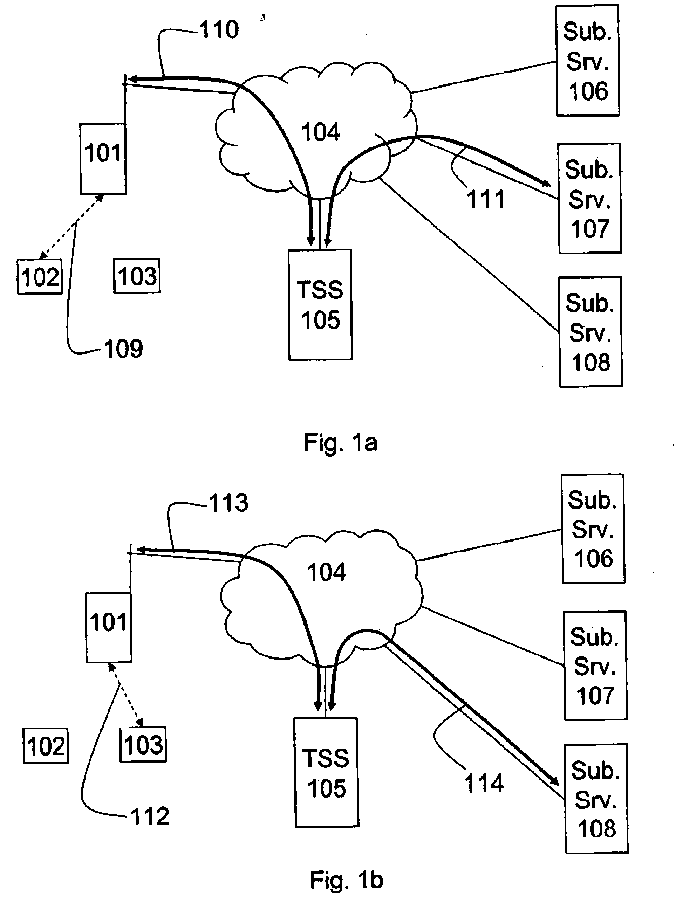

Fig. 1a illustrates a first embodiment of the system according to the present invention wherein a client terminal 101, in this example a mobile telephone, is connected to an access network 104 through which it can communicate with a Touch Signalling Service (TSS) server 105. The TSS server 105 is in turn able to access the subscription servers 106, 107 and 108 through the same access network 104. In an alternative embodiment, the TSS server 105 may communicate with one or more of the subscription server 106 to 108 through one or more additional access networks, different from the access network 104.

In the example illustrated in Fig. 1a, the client terminal 101 touches a service advertisement 102 as is indicated by arrow 109. During this touch, the client terminal retrieves a service identification from the service advertisement 102. Based on the service identification, the client terminal 101 automatically formulates a request for TSS server 105. The request with the identification therein is sent to the TSS server 105 as is indicated by arrow 110. Upon receipt of the request, the TSS server 105 will determine the subscription server which is related to the received identification. In this particular example, the identification is related to a service for which subscription server 107 is responsible. The TSS server 105 will then formulate a subscription request for subscription server 107 and send the request to the subscription server 107 as is indicated by arrow 111. In one embodiment, the TSS server 105 forwards the information as received from the client terminal 101 to the subscription server 107. In an alternative embodiment, the user of client terminal 101 is pre-registered in the TSS server 105 with additional information. In such case, the TSS server 105 may include one or more elements related to the user's information in the request that is sent to the subscription server 107.

Fig. 1b shows the same embodiment of the present invention as Fig. 1a. However, the client terminal 101 touches the token 103 as is indicated by arrow 112. The token 103 is a service advertisement for a different service, and thus the client terminal 101 sends a request to the TSS server 105 as is indicated by arrow 113. This request is a different request compared to the request in Fig. 1a. The TSS server 105 will determine the appropriate subscription server 108 for the second request and request a subscription of the user to another service. This request is indicated by arrow 114.

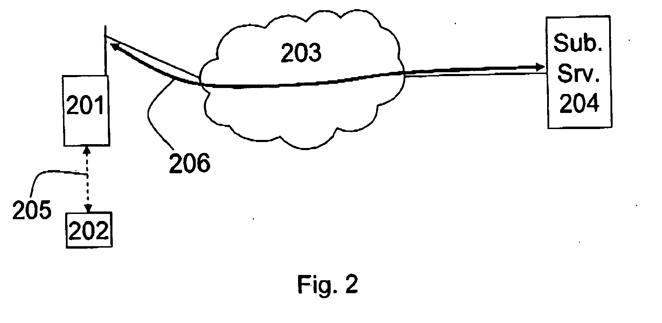

Fig. 2 illustrates an alternative embodiment of the present invention. This figure shows a client terminal 201, which is a mobile telephone, an access network 203 which is in this example a mobile telephone network and a subscription server 204. The service in this particular example is a queue ticket system wherein a user receives a queue number by touching a fixed token 202 at the entrance of a store with its mobile telephone 201. The touching is indicated by arrow 205. The mobile telephone 201 reads an identification from the token 202 which in this case defines the subscription server 204. The mobile telephone initiates a subscription request and sends the request to the subscription server 204 as is indicated by arrow 206. The subscription request contains the telephone number of the client terminal 201 which enables the system to send the estimated waiting time to the client terminal 201 and send updates at a particular time interval. As such, the user of client terminal 201 is able to leave and return to the store in time for his tum. An alternative use of the above described ticket service can be a notification of product delivery. For instance, if a person has ordered a car, they can touch a tag at the car dealership and be registered with a notification service. The user wilt then receive a message on his mobile telephone or by email Indicating that his car is ready for pickup. Other examples are notification of the delivery of a parcel or registered letters at the post office.

Optionally the client terminal may need to perform a lookup of the subscription server before it can initiate the request. In such case, the above described embodiment may be extended by two additional steps. The first step is a request from the client terminal to a lookup function such as a TSS, a DNS server or another lookup function wherein the client terminal asks for a location of the subscription server related to the tag which was read. The second step is an answer to that request from the lookup function to the client terminal. The client terminal can then use this answer to initiate the request as described above.

These examples only illustrate the subscription to a particular service. The service itself is not shown and may or may not involve elements illustrated in the drawings. For instance, the service delivery may go through the illustrated access networks. Furthermore, the client terminal which is used to initiate the subscription is not necessarily the device which receives the session. For instance, a user may use his mobile telephone to subscribe to an email service, which he consults using a desktop computer or laptop computer or vice versa.

It should be noted that although the client terminals in the above examples are mobile telephones, they may as well be PDA's with communication capabilities or fixed appliances with a wireless or wired communication interface such as a desktop computer. The client terminals may also offer a confirmation option to the user when a registration for a service is ready to avoid an unwanted subscription.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

1. A service subscription system comprising:
- at least one subscription server (106, 107, 108; 204) for managing subscriptions to at least one service; and
- a client terminal (101; 201) able to communicate with said subscription server (108, 107, 108; 204);
**characterized in that** said client terminal (101; 201) comprises :
- means for retrieving a service identification related to a service from a service advertisement (102, 103; 202) by touch (109, 112; 205); and
- means for automatically initiating a subscription request (110, 113; 206) towards said subscription server (106, 107, 108; 204) based on said service identification.

2. The service subscription system according to claim 1, **characterized in that** said system further comprises a Touch Signalling Service server (105) adapted to receive said subscription request (110, 113; 206) from said client terminal (101; 201) and adapted to subscribe (111, 114) a user associated with said client terminal (101; 201) to said service at said subscription server (106, 107, 108; 204).

3. The service subscription system according to claim 1, **characterized in that** said service advertisement (102, 103; 202) comprises at least one token for holding at least said service identification and that said client terminal (101; 201) comprises at least one token reader for retrieving at least said service identification from said token or vice versa.

4. The service subscription system according to claim 1, **characterized in that** said at least one token and said at least one token reader are based on or more of the following:
- Radio Frequency Identification technology;
- Near Field Communication technology;
- Optical recognition technology;
- Bluetooth technology; and
- Infrared communication technology.

5. The service subscription system according to claim 1, **characterized in that** said client terminal (101; 201) is a mobile communication device.

6. A client terminal (101; 201) for use in a service subscription system as defined in claim 1.

7. A Subscription server (106, 107, 108; 204) for use in a service subscription system as defined in claim 1.

8. A service subscription method for use in a service subscription system comprising at least one subscription server (108, 107, 108; 204) and a client terminal (101; 201), said service subscription method comprising the step of:
- managing subscriptions to at least one service at said subscription server (106, 107, 108; 204),
**characterized in that** said method further comprises the steps of:
- retrieving by said client terminal (101; 201) a service identification related to a service from a service advertisement by touch (109, 112; 205); and
- automatically initiating a subscription request from said client terminal (101; 201) towards said subscription server (106; 107; 108; 204) based on said service identification.
